# EUROPEAN PATENT APPLICATION

(11) **EP 3 808 594 A1**
(43) Date of publication of application: **21.04.2021**
(21) Application number: 20156744.3
(22) Date of filing: 11.02.2020
(51) Int. Cl.: B60N 2/23, B60N 2/24, B60N 2/06

(54) **PASSENGER SEAT FOR VEHICLES**

(30) Priority: 16.10.2019 TR 201915977
(71) Applicant: BRUSA Koltuk ve Ic Trim Teknolojileri Sanayi ve Tiaret A.S., 16159 Nilüfer/Bursa (TR)
(72) Inventor: Tuna, Berke, Bursa (TR)
(74) Representative: Habermann, Hruschka & Schnabel

(57) **Abstract**

The present invention relates to a passenger seat (1) for vehicles having a first device (10) for activating a tilting motion of a backrest (4) and a second device (11) for activating a lateral or a back and forth motion of the seat (1) relative to a neighbouring passenger seat (9), further comprising a handle (7) which is adapted to both actuate the first device (10) for activating a tilting motion of the backrest (4) and the second device (11) for activating a lateral or a back and forth motion of the seat (1) upon at least one single manual operation of the handle (7).

## Description

The present invention relates to a passenger seat for vehicles, in particular for buses, minibuses, trains, airplanes, ships and other public transport vehicles.

Passenger seats of public transport vehicles usually are constructed to provide a certain comfort, in particular when aimed for long-distance travels. Such comfort requirements inter alia include the possibilities to individually adjust the inclination of the backrest of the seat, to adjust the distance between neighbouring seats and to adjust the position of the seating surface to the personal needs of the passenger, respectively.

In order to achieve such adjustments, when needed, passenger seats usually comprise several actuation means, such as knobs, buttons, levers, handles etc., which are arranged laterally to or at the front of the seating surfaces and/or laterally to the backrest. Commonly, each mechanism as provided in the seat frame structure for offering such adjustment possibilities has its own actuation means.

For example, in public transportation vehicles several, at least two side-by-side passengers seats in a row are arranged, the backrests of which on the one hand can be tilted back and forth in line with the needs of the passengers by their manual operation of buttons or similar, which are arranged on the lateral seat edges. The passenger can adjust the position of the seat backrest by pushing or pulling the button on the edge of the seat for rearwardly folding or upwardly raising the backrest either actively, e.g. by activating motors mounted in the seat frame structure, or passively by using the own weight when the backrest is unlocked thereby. On the other hand, if the distance between adjacent seats is to be increased or decreased, commonly a second button or similar is used, which will be manually operated by the passengers, so as to actively or passively activate the device or mechanism of the seat provided for such lateral movement. The same may come true with respect to any back and forth movement of the seat or seating surface, in which also separate actuation means may be provided for that purpose.

In general, the fact that for all kind of adjustment movements in relation to passenger seats numerous separate actuation means are provided, several drawbacks occur. First of all, the arrangement of the actuation means needs to be provided in a very small area, usually in the region of the lateral seat edges. This may lead, moreover since the passengers have no chance to visually control their manual operations of the different actuation means, to operating errors, when accidently the wrong button is pressed or pushed, for instance. As regards usability, too many actuation means may interfere with each other resulting in poor overall ergonomics.

Further, the provision of several actuation means which each relates to separate activation mechanisms and devices inside the seat frame structure require a complicated and thus costly construction with respect to a restricted space, which increases the manufacturing process for such seats and the associated labour costs. Finally, the overall aesthetic appearance of such passenger seats comprising several grips and buttons is quite low.

Based on this, it is an objective of the present invention to eliminate the above-mentioned disadvantages and to provide an easy-to-use and easy-to-assemble actuation means for several functions, in particular, but not exclusively, for an activation of mere mechanically embodied adjustment mechanisms in passenger seats.

Such objective is solved by a passenger seat according to claim 1.

Accordingly, the present invention provides a passenger seat for vehicles having a seat frame structure supporting a seating surface and a backrest being arranged at the seat in a tilting manner, the seat frame structure comprising a first device for activating a tilting motion of the backrest and a second device for activating a lateral or a back and forth motion of the seat relative to a neighbouring passenger seat, further comprising an actuation means which is adapted to both actuate the first device for activating a tilting motion of the backrest and the second device for activating a lateral or a back and forth motion of the seat upon at least one, preferably only one single manual operation of the actuation means.

The actuation means may be configured as a one-piece handle being rotatably arranged against the seat frame structure.

Preferably, the handle and the devices and mechanisms to be activated by said handle are adapted such that a tilting motion of the backrest for adjusting an inclined position of it is enabled when the handle will be pushed down, and a lateral movement of the seat in relation to a neighbouring seat or a back and forth movement of either the entire seat or the seating surface is enabled when the handle is pulled up, or vice versa.

By that, the invention provides one single actuation means for all adjustment functions of such a passenger seat, which preferably shall be realized by only mechanically operated means, i.e. without actuators such as electric motors.

According to an embodiment of the passenger seat according to the invention, the seat frame structure comprises a lateral cover, which lateral cover comprises a first groove for the passage of a first actuation pin of the first device for activating a tilting motion of the backrest and a second groove for the passage of a second actuation pin of the second device for activating a lateral or back and forth motion of the seat.

For that purpose, the handle may comprises a first recess for receiving the first actuation pin and a second recess for receiving the second actuation pin in a sliding manner, respectively.

If space allows, it may even be possible to provide more than two grooves in the cover and correspondingly more than two recesses in the handle, which cooperate with further actuation pins of adjustment mechanisms to be arranged inside the seat frame structure.

According to the invention, the handle may comprise a guiding pin and the lateral cover may comprise a guiding groove for receiving said guiding pin.

Further, the first recess may be adapted to guide the first actuation pin along the first groove and at the same time the second recess may be adapted to guide the second actuation pin along the second groove.

According to a preferred embodiment of the passenger seat according to the invention, the first recess may be adapted to limit the movement of the first actuation pin in the first groove between a release position and a locking position of the first device for activating a tilting motion of the backrest and at the same time the second recess may be adapted limit the movement of the second actuation pin in the second groove between a release position and a locking position of the second device for activating a lateral or back and forth motion of the seat.

According to another preferred embodiment of the passenger seat according to the invention the guiding groove may be adapted to both limit the movement of the first actuation pin in the first groove between a release position and a locking position of the first device for activating a tilting motion of the backrest and/or to limit the movement of the second actuation pin in the second groove between a release position and a locking position of the second device for activating a lateral or back and forth motion of the seat.

Yet according to another preferred embodiment of the passenger seat according to the invention, the first recess and the first groove on the one hand and the second recess and the second groove on the other may be adapted to activate the first device for activating a tilting motion of the backrest and to lock the second device for activating a lateral or back and forth motion of the seat at a first angular position of the handle and to lock the first device for activating a tilting motion of the backrest and to activate the second device for activating a lateral or back and forth motion of the seat at a second angular position of the handle, or vice versa, wherein the second angular position is greater than the first angular position.

For further ease of usability, the handle may be guided in a recess of the lateral cover of the seat frame structure. Even further, the handle may be under a defined pretension. By that the pulling force and/or the pushing force of the handle can be adjusted and the guidance in the recess allows the compensation of lateral forces as usually occurring during manual operation.

Such a single handle according to the invention provides a high user-friendliness and adds to a more aesthetic appearance to the passenger seat comprising such a handle.

Moreover, the invention relates to a vehicle, in particular for mass transport of people, which comprises passenger seats according to at least one of the above-mentioned configurations.

Further advantages and features shall become apparent from the following description of the embodiments as shown in connection with the accompanied drawings, in which
Figs. 1a,b schematically show different positions of the backrest of a passenger seat;
Figs. 2a,b schematically show different lateral positions of passenger seats;
Fig. 3a shows different devices for adjustment as being arranged in a passenger seat according to an embodiment of the invention in perspective view;
Fig. 3b shows these different devices for adjustment in explosive view;
Fig. 4 shows a lateral view onto these devices for adjustment without a lateral cover and the remaining seat structure;
Fig. 5 shows a lateral view onto the lateral cover only; and
Fig. 6 shows a lateral view onto the inside of a handle according to the invention.

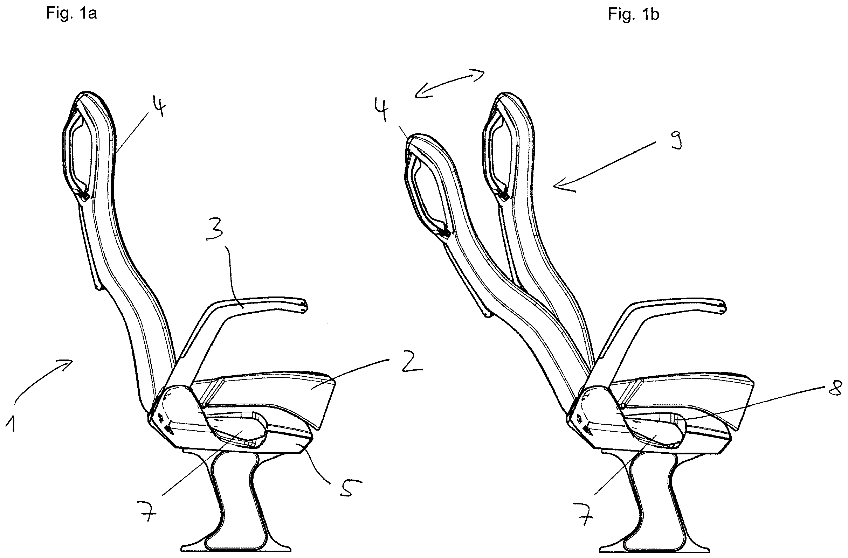

In Figs. 1a and 1b a passenger seat 1 is shown from the side. The passenger seat 1 comprises a seating surface 2, an armrest 3 and a backrest 4. In a lateral frame or cover 5, which closes a seat frame structure 6, a handle 7 is arranged inside a recess 8 in a swivelling manner. The backrest 4 is shown in different angular positions.

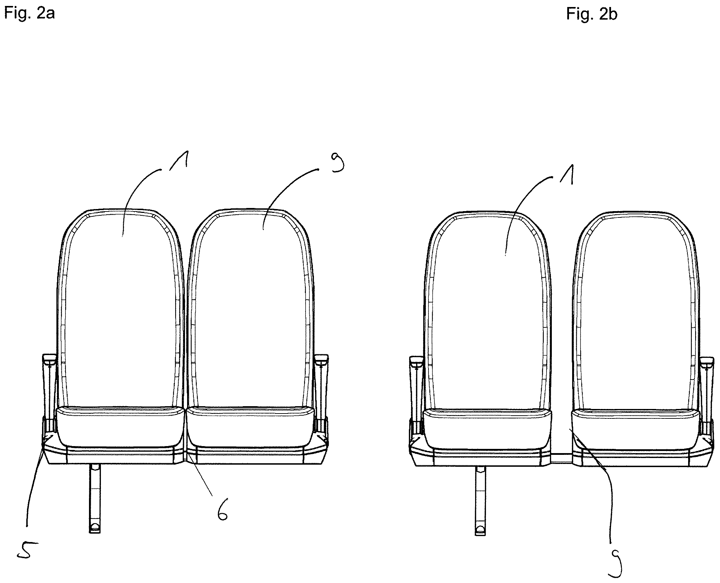

In Figs. 2a and 2b schematically different lateral positions of the one passenger seat 1 in relation to a neighbouring passenger seat 9 are shown.

Both the inclination or inclined position of the backrest 4 and the lateral positions of one seat 1 relative to the other seat 9 are realized by the manual operation of the handle 7, which according to the invention is configured and adapted to activate both devices or mechanisms provided for these respective purposes in the seat frame structure 6, either simultaneously, or preferably subsequently when being swivelled in one or in either one of the rotational directions for the handle 7 in the recess 8.

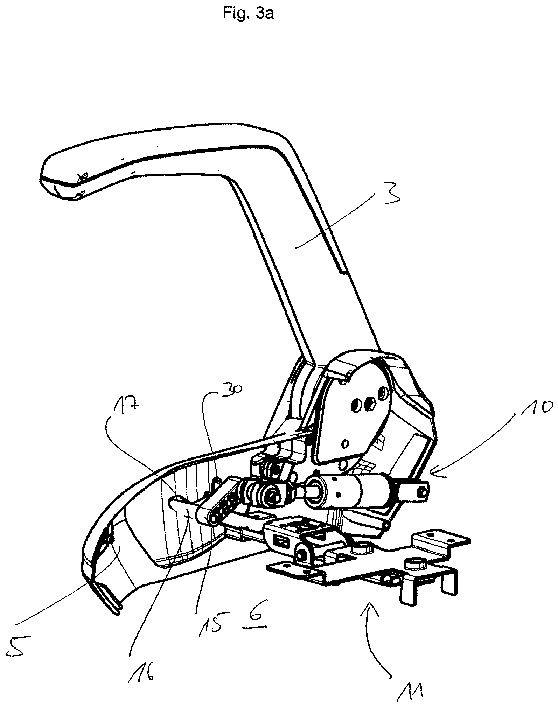

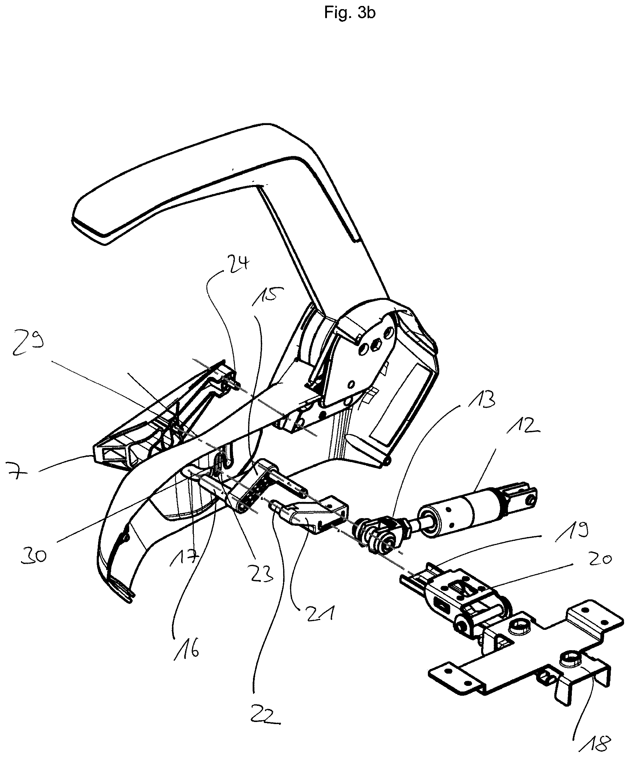

Figs. 3a and 3b show schematically the devices which will be actuated by the manual operation of the handle 7 according to the invention.

A first mechanism or device 10 is provided for activating a tilting motion of the backrest 4, while a second mechanism or device 11 is provided for activating a lateral motion of the seat 1.

The first device 10 comprises a hydraulic cylinder 12, which is linked to a rotatable joint associated with the backrest 4 (not shown). A piston 13 of the cylinder is journaled to a pin 14 of a first coupling or linkage member 15, which diametrically opposed to the pin 14 comprises a first actuation pin 16.

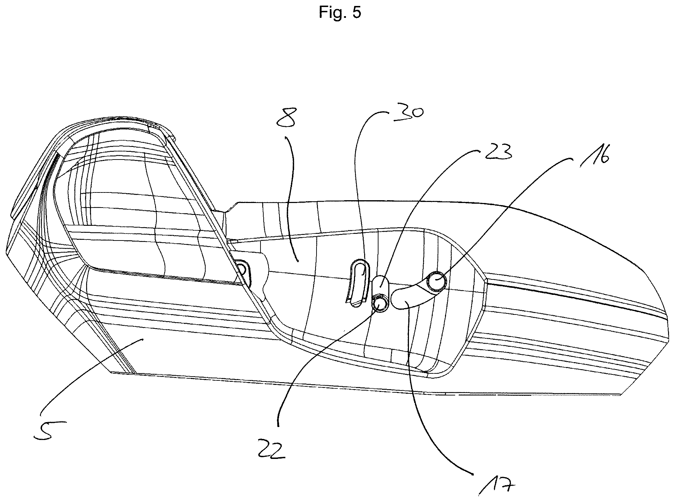

As can be seen in Fig. 3a and 5, the first actuation pin 16 passes a first groove 17 provided in the lateral cover 5, thereby being guided in said first groove 17.

When the first actuation pin 16 is moved along the first groove 17 upon rotation of the handle 7, the cylinder gets activated so as to activate or unlock a mechanism for tilting the backrest 4.

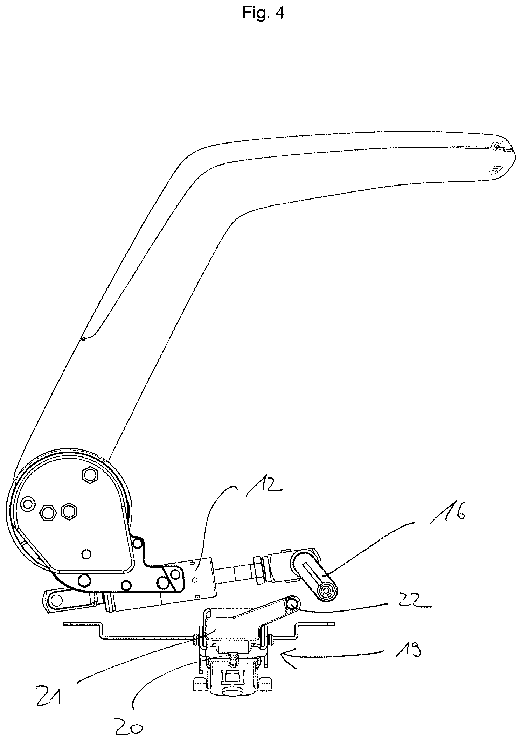

The second device 11 basically comprises a support structure 18 on which the seating surface 2 is arranged. The support structure 18 further comprises a rail-type sliding mechanism 19 having a locking mechanism 20, as can best be seen in Fig. 4.

The sliding mechanism 19 is connected to a second coupling or linkage member 21. Opposite to the second device 11 the second linkage member 21 comprises a second actuation pin 22.

As can best be seen in Fig. 5, the second actuation pin 22 passes a second groove 23 provided in the lateral cover 5, thereby being guided in said second groove 23.

When the second actuation pin 22 is moved along the second groove 23 upon rotation of the handle 7, at a certain position, the locking mechanism 20 gets released so as to allow a lateral motion of the seat 1.

The handle 7, which is preferably made as an unicast mould, comprises a journal pin 24 for rotatable arrangement at a corresponding joint in the lateral cover 5, thereby allowing the handle 7 to be manually swivelled in the recess 8 of the lateral cover 5.

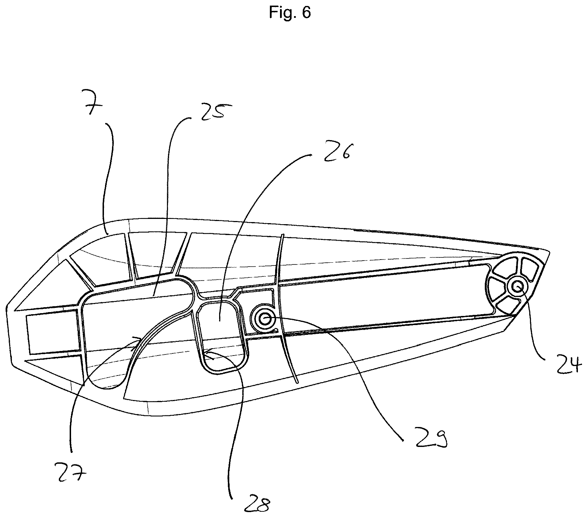

Fig. 6 shows the handle 7 from the inside. The handle 7 comprises a first recess 25 for receiving the free end of the first actuation pin 16 and a second recess 26 for receiving the free end of the second actuation pin 22. The first recess 25 further comprises a contour 27 along which the first actuation pin 16 can be guided, while the second recess 26 comprises another contour 28 along which the second actuation pin 22 can be guided, both when the handle 7 will be rotated around the joint 24.

Further, the handle 7 comprises a guiding pin 29 which is slideably received in a guiding groove of the lateral cover 5.

According to the invention, the respective positions and contours of the first recess 25, the second recess 26, the guiding pin 29 and the journal pin 24 on the one hand and of the first groove 17, the second groove 23 and the guiding groove 30 on the other each are configured and dimensioned with respect to each other and with respect to the arrangement of the first device 10 and the second device 11 that upon a swivelling motion of the handle 7 either one of the first device 10 or the second device 11 gets activated, released and/or locked depending on a particular angular position of the handle 7.

Preferably, the respective positions and contours of these elements are arranged such that when the handle 7 is pressed downwards, the backrest 4 is released and can be pushed backwards by the weight of or pressure applied by the passenger onto the backrest 4, while the cylinder additionally dampens and supports the tilting motion of the backrest 4. Thereby, the movement of the handle 7 is limited by the guiding groove 30, preventing the application of excessive pressure on the handle 7 itself, while the activation of the first mechanism 10 is provided by the guidance of the first actuation pin 16 along the first groove 17, correspondingly.

Further, at the same time the respective positions and contours of these elements are arranged such that when the handle 7 is pulled upwards, the second mechanism 11 is activated in order to allow for the opening of an intermediate distance between the adjacent seats 1 and 9. For that purpose, the second actuation pin 22 is moved along the second groove 23, accordingly.

The present solution with one single actuation means in the form of an easy-to-grasp handle 7 for at least two different functions for the adjustment of a passenger seat 1 is quite user-friendly and thus offers good ergonomics. Further, it proves to be easy to assemble and is thus cheap.

By this application, it is intended to cover all alternatives, modifications and equivalents that may be included within the scope of the invention as defined by the appended claims. It should be understood that the details shown are shown only for the purpose of illustrating a preferred embodiment of the present invention.

## Claims

1. Passenger seat (1) for vehicles having a seat frame structure (6) supporting a seating surface (2) and a backrest (4) being arranged at the seat (1) in a tilting manner, the seat frame structure (6) comprising a first device (10) for activating a tilting motion of the backrest (4) and a second device (11) for activating a lateral or a back and forth motion of the seat (1) relative to a neighbouring passenger seat (9), **characterized by** an actuation means (7) which is adapted to both actuate the first device (10) for activating a tilting motion of the backrest (4) and the second device (11) for activating a lateral or a back and forth motion of the seat (1) upon at least one single manual operation of the actuation means (7).

2. Passenger seat according to claim 1, in which the actuation means (7) is configured as a handle (7) being rotatably arranged against the seat frame structure (6).

3. Passenger seat according to claim 2, in which the seat frame structure (6) comprises a lateral cover (5), which lateral cover (5) comprises a first groove (17) for the passage of a first actuation pin (16) of the first device (10) for activating a tilting motion of the backrest (4) and a second groove (23) for the passage of a second actuation pin (22) of the second device (11) for activating a lateral or back and forth motion of the seat (1).

4. Passenger seat according to claim 3, in which the handle (7) comprises a first recess (25) for receiving the first actuation pin (16) and a second recess (26) for receiving the second actuation pin (22) in a sliding manner, respectively.

5. Passenger seat according to claim 3 or 4, in which the handle (7) comprises a guiding pin (29) and the lateral cover (5) a guiding groove (30) for receiving said guiding pin (29).

6. Passenger seat according to claim 5, in which the first recess (25) is adapted to guide the first actuation pin (16) along the first groove (17) and in which the second recess (26) is adapted to guide the second actuation pin (22) along the second groove (23).

7. Passenger seat according to claim 6, in which the first recess (25) is adapted to limit the movement of the first actuation pin (16) in the first groove (17) between a release position and a locking position of the first device (10) for activating a tilting motion of the backrest (4) and in which the second recess (26) is adapted limit the movement of the second actuation pin (22) in the second groove (23) between a release position and a locking position of the second device (11) for activating a lateral or back and forth motion of the seat (1).

8. Passenger seat according to claim 5, 6 or 7, in which the guiding groove (30) is adapted to both limit the movement of the first actuation pin (16) in the first groove (17) between a release position and a locking position of the first device (10) for activating a tilting motion of the backrest (4) and/or to limit the movement of the second actuation pin (22) in the second groove (23) between a release position and a locking position of the second device (11) for activating a lateral or back and forth motion of the seat (1).

9. Passenger seat according to claim 7 or 8, in which the first recess (25) and the first groove (17) on the one hand and the second recess (26) and the second groove (23) on the other are adapted to activate the first device (10) for activating a tilting motion of the backrest (4) and to lock the second device (11) for activating a lateral or back and forth motion of the seat (1) at a first angular position of the handle (7) and to lock the first device (11) for activating a tilting motion of the backrest (4) and to activate the second device (11) for activating a lateral or back and forth motion of the seat (1) at a second angular position of the handle (7), or vice versa, wherein the second angular position is greater than the first angular position.

10. Passenger seat according to one of claims 3 to 9, in which the handle (7) is guided in a recess (8) of the lateral cover (5) of the seat frame structure (6).

11. Passenger seat according to one of claims 3 to 10, in which the handle (7) is under pretension.

12. Vehicle, in particular for mass transport of people, comprising a passenger seat (1) according to one of claims 1 to 11.
